# EUROPÄISCHE PATENTSCHRIFT

(11) **EP 3 067 279 B1**
(45) Veröffentlichungstag und Bekanntmachung des Hinweises auf die Patenterteilung: **25.04.2018**
(21) Anmeldenummer: 16159326.4
(22) Anmeldetag: 09.03.2016
(51) Int. Cl.: B65B 7/28, B65B 55/24, B65G 59/10, B67B 1/03, B67B 3/00, B67B 3/062

(54) **VORRICHTUNG ZUM VEREINZELN VON DOSENDECKELN**
DEVICE FOR SEPARATING CAN LIDS
DISPOSITIF DESTINÉ À LA SÉPARATION DE COUVERCLES DE BOITE

(30) Priorität: 10.03.2015 AT 501912015
(43) Veröffentlichungstag der Anmeldung: 14.09.2016
(73) Patentinhaber: Red Bull GmbH, 5330 Fuschl am See (AT)
(72) Erfinder: Schweigkofler, Stephanie, 5330 Fuschl am See (AT)
(74) Vertreter: Burger, Hannes

(56) Entgegenhaltungen:
- EP-B1- 0 934 219
- DE-U1- 9 310 736
- US-A- 3 040 493
- US-A1- 2009 178 456
- US-A1- 2013 255 827

## Beschreibung

Die Erfindung betrifft eine Vorrichtung zum Vereinzeln von in einem Stapel angeordneten Dosendeckeln mittels eines Abtrennmessers gemäß dem Oberbegriff von Anspruch 1.

Weiters betrifft die Erfindung ein Verfahren zum Verschließen eines offenen Behälters mit einem Dosendeckel zu einer geschlossenen Dose gemäß dem Oberbegriff von Anspruch 3.

Eine Vorrichtung und ein Verfahren der eingangs genannten Art sind beispielsweise aus der US2009178456Albekannt geworden.

Weitere Vorrichtungen zum Vereinzeln sind aus der EP0934219B1 sowie der DE 9310736 U1 bekannt geworden. Die US 3040493 A betrifft eine Vorrichtung und ein Verfahren zum Reinigen von Oberflächen gefüllter Dosen vor ihrem Verschließen mit einem Dosendeckel.

Nachteilig bei der bekannten Vorrichtung bzw. bei dem bekannten Verfahren ist es, dass bei einer Vereinzelung der Dosendeckel entstehender Abrieb auf den Dosendeckeln verbleiben und es daher zu einer Verschmutzung des Doseninhaltes mit auf den Dosendeckeln befindlichen Partikeln kommen kann.

Es ist daher eine Aufgabe der Erfindung den oben genannten Nachteil des Stands der Technik zu überwinden.

Diese Aufgabe wird mit einer Vorrichtung der eingangs genannten Art erfindungsgemäß durch die Merkmale des kennzeichnenden Teils von Anspruch 1 gelöst.

Die erfindungsgemäße Lösung ermöglicht es, auf einfache Weise die vereinzelten Dosendeckel von Verschmutzungen weitestgehend zu befreien bzw. zu bewahren.

Bei einer Ausführungsform, die ein sehr effizientes Absaugen der Dosendeckel ermöglicht, kann es vorgesehen sein, dass das Abtrennmesser als um eine Achse drehbar gelagerte Scheibe ausgebildet ist, wobei in einer zur Achse parallelen Richtung betrachtet zumindest ein Abschnitt der Absaugöffnung zumindest einen Randbereich der Scheibe abdeckt.

Um die abgesaugten Partikel zu sammeln und eine Analyse der von den Dosen abgesaugten Partikel zu ermöglichen kann es vorgesehen sein, dass die zumindest eine Absaugvorrichtung einen Sammelbehälter für abgesaugte Partikel aufweist.

Die oben genannte Aufgabe lässt sich auch mit einem Verfahren der eingangs genannten Art erfindungsgemäß lösen bei welchem in Schritt i) bei dem Vereinzeln mittels des Abtrennmessers freiwerdende Partikel zumindest von einer Oberfläche des untersten Dosendeckels des Stapels von Dosendeckeln abgesaugt werden.

Das erfindungsgemäße Verfahren ermöglicht eine Absaugung des entstehenden Abriebes unmittelbar an der Stelle, an welcher dieser entsteht,

Gemäß einer vorteilhaften Weiterbildung der Erfindung kann es vorgesehen sein, dass in Schritt i) bei Vereinzeln der Dosendeckel mittels des Abtrennmessers frei werdende Partikel aus einem Zwischenraum zwischen dem untersten Dosendeckel des Stapels und dem nächstfolgendem Dosendeckel des Stapels abgesaugt werden.

Hierdurch lässt sich sehr effizient, Partikel sowohl von der Unterseite als auch von der Oberseite eines Dosendeckels entfernen.

Um jedoch zu vermeiden, dass auf den Dosendeckel befindliche Partikeln bei einem Verschließen der Dose in deren Inneres gelangen, kann es vorgesehen sein, dass während Schritt i) Partikel zumindest von der Unterseite des untersten Dosendeckels des Stapels abgesaugt werden.

Das Absaugen der Partikel von den Dosendeckeln kann gemäß einer Variante der Erfindung auch nach bereits erfolgter Vereinzelung erfolgen. Gemäß dieser Ausführungsform können nach Schritt i) Partikel zumindest von der Unterseite des in Schritt i) vereinzelten Dosendeckels abgesaugt werden.

Bei einer vorteilhaften Weiterbildung des erfindungsgemäßen Verfahrens kann es vorgesehen sein, dass die in Schritt i) abgesaugten Partikel in einem Sammelbehälter gesammelt werden. Dies ermöglicht auf eine einfache Weise eine Kontamination der Atmosphäre, in welcher ein Verschließen der Dosen erfolgt, zu verhindern. Darüber hinaus können die gesammelten Partikel einer Analyse unterworfen werden.

So kann es gemäß einer weiteren Ausgestaltung des erfindungsgemäßen Verfahrens vorgesehen sein, dass in dem Sammelbehälter gesammelte Partikel analysiert werden. Dies ermöglicht festzustellen, welche Materialien sich auf den Dosendeckeln befinden, so kann beispielsweise erkannt werden, ob sich auf den Dosendeckeln auch prozessfremde Materialien befinden. Dies gestattet eine bessere Überwachung und Qualitätskontrolle des Herstellungsprozesses.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Vorrichtung;
- Fig. 2: eine Vorrichtung zum Verschließen einer Dose mit der Vorrichtung aus Fig. 1.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können.

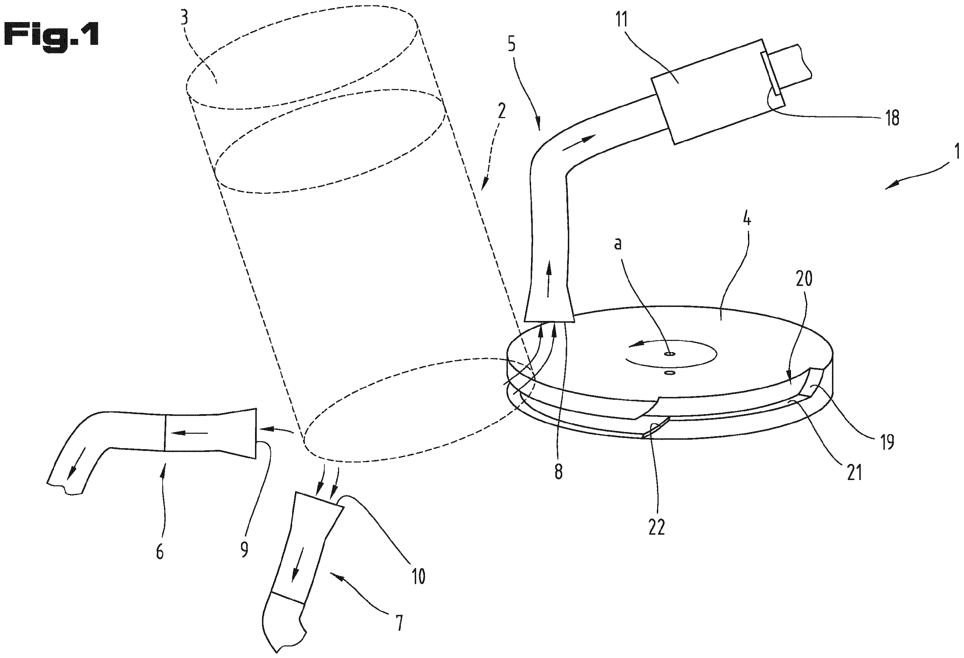

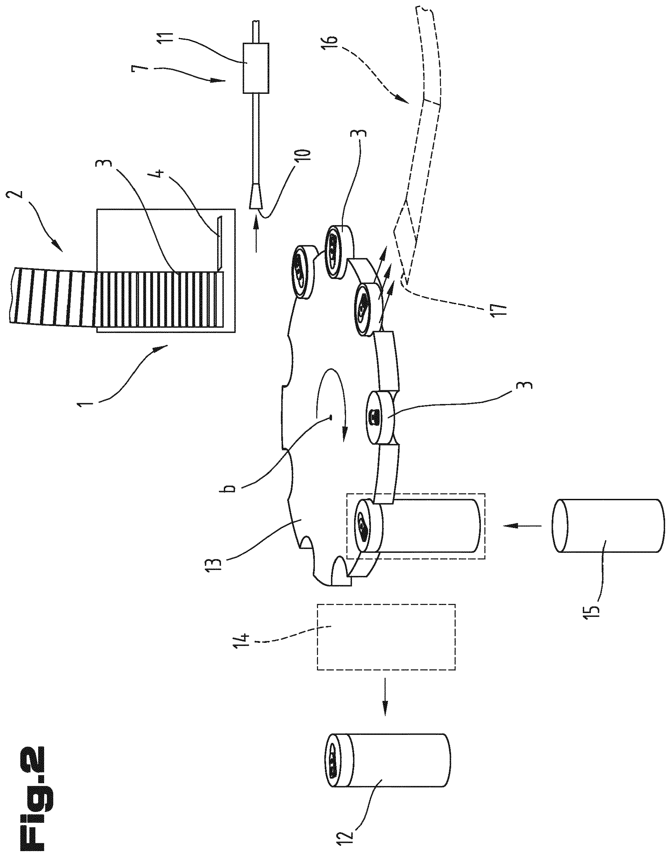

Gemäß Fig. 1 weist eine Vorrichtung 1 zum Vereinzeln von in einem Stapel 2 angeordneten Dosendeckeln 3 ein Abtrennmesser 4 auf. Die Dosendeckel 3 können aus Metallblech, beispielsweise beschichtetem oder nichtbeschichtetem Aluminiumblech, gefertigt sein. Das Abtrennmesser 4 kann als Scheibe, beispielsweise aus Metall, insbesondere aus Stahl, ausgeführt und um eine Achse a drehbar gelagert sein, welche es im Betrieb rotiert. In Fig. 1 ist die Rotationsrichtung des Abtrennmessers 4 um die Achse a mit einem Pfeil angedeutet. Die Achse a des Abtrennmessers 4 kann seitlich neben dem Stapel 2 angeordnet sein. Die zu vereinzelnden Dosendeckel 2 des Stapels 3 sind über dem Abtrennmesser 4 angeordnet und werden durch die Schwerkraft gegen eine Oberfläche des Abtrennmessers gepresst. Der jeweils unterste Dosendeckel 3 des Stapels 2 liegt hierbei an einem äußeren Rand des Abtrennmessers 4 auf, welcher an seiner Oberfläche eine Ausnehmung 20 aufweist. Der unterste Dosendeckel 3 des Stapels 2 rutscht bei einer Rotation des Abtrennmessers 4 über eine abgeschrägte Fläche 19 der Ausnehmung 20 auf eine tiefer liegende Fläche 21, von welcher er über eine Fläche 22 in Richtung in Fig. 2 mit dem Bezugszeichen 13 versehenen Fördereinrichtung bewegt wird. Beispielsweise kann ein vereinzelter Dosendeckel 3 auf die Fördereinrichtung 13 herunterfallen.

An dieser Stelle sei daraufhingewiesen, dass es sich bei dem in Fig. 1 dargestellten Abtrennmesser 4 lediglich um eine beispielhafte Ausführungsform eines Abtrennmessers handelt und auch andere bekannte Ausführungsformen von Abtrennmessern zum Einsatz kommen können.

Darüber hinaus umfasst die Vorrichtung 1 eine oder mehrere Absaugvorrichtungen 5, 6, 7 zum Absaugen von beispielsweise durch Abrieb während des Vereinzelns der Dosendeckel 3 entstehenden und sich auf den Dosendeckeln 3 absetzenden Partikeln von den Dosendeckeln 3. Bei diesem Abrieb kann es sich um Metallstaub, beispielsweise Aluminiumstaub handeln, der durch eine Bewegung des Abtrennmessers 4 gegenüber einem Dosendeckel 3 entstehen kann. Auch kann es sich bei den Partikeln um Staubpartikel handeln, die sich zwischen benachbarten Dosendeckeln 3 befinden und durch die Vereinzelung frei gesetzt werden. Weiters kann die Vorrichtung 1 mit einem hier nicht dargestellten Gehäuse eingehaust sein, um auch ein ungewolltes Eindringen von Partikeln aus der Umgebung zu vermeiden.

Die Absaugvorrichtung 5 weist eine Absaugöffnung 8 auf, die in vertikaler Richtung über dem Abtrennmesser 4 angeordnet ist. Während die Absaugvorrichtung 6 eine Absaugöffnung 9 aufweist, die auf Höhe des Abtrennmessers 4 angeordnet ist. Die Absaugvorrichtung 7 weist hingegen eine Absaugöffnung 10 auf, die sich unter dem Abtrennmesser 4 befindet. Bevorzugterweise ist nur eine der Absaugvorrichtungen 5, 6 und 7 bzw. eine der Absaugöffnungen 8, 9, 10 bei der Vorrichtung 1 vorgesehen. Allerdings kann die Vorrichtung 1 auch mehrere Absaugvorrichtungen 5, 6, 7, bzw. Absaugöffnungen 8, 9, 10 aufweisen. Die Absaugöffhungen 8, 9, 10 können beispielsweise durch Öffnungen bzw. Schlitze von Düsen gebildet sein, durch welche die Luft abgesaugt wird. Von Vorteil ist es hierbei, wenn die Absaugung an einer Stelle passiert, an welcher die Unterseiten der Dosendeckel 3 gut zugänglich sind.

Wie aus Fig. 1 ersichtlich ist, deckt ein Abschnitt der Absaugöffnung 8 einen Randbereich der Scheibe ab. Dies ermöglicht eine gute Absaugung von Partikeln zwischen dem untersten Dosendeckel 3 und dem nächstfolgenden Dosendeckel des Stapels 2.

Die Absaugvorrichtung 5 kann einen Sammelbehälter 11 für abgesaugte Partikel aufweisen. Der Sammelbehälter 11 kann zwischen der Absaugöffnung 8 und einer Vorrichtung zur Erzeugung einer Strömung, beispielsweise eine Pumpe oder ein Ventilator, angeordnet sein. Der Sammelbehälter 11 kann einen oder mehrere Filter 18 aufweisen, um ein Austreten von Partikeln zu verhindern.

An dieser Stelle sei darauf hingewiesen, dass auch die anderen Absaugvorrichtungen 7 und 8 entsprechende Sammelbehälter aufweisen können, die aber hier nicht dargestellt sind.

Das erfindungsgemäße Verfahren soll anhand der in Figur 2 dargestellten Vorrichtung näher erläutert werden.

In einem Schritt i) wird mittels des Abtrennmessers 4 der unterste Dosendeckel 3 des Stapels 2 von Dosendeckeln 3 von dem Stapel 2 getrennt und vereinzelt.

In einem Schritt ii) wird der vereinzelte Dosendeckel 3 mittels einer Fördereinrichtung 13 zu einer Vorrichtung 14 zum Verschließen eines offenen Behälters 15 mit dem Dosendeckel, welcher ein Füllgut enthält transportiert. In dem dargestellten Ausführungsbeispiel ist die Fördereinrichtung 13 als um eine Achse b rotierender Sternförderer ausgeführt. Die Rotationsrichtung der Fördereinrichtung 13 ist in Fig. 2 mit einem Pfeil angedeutet. Die Fördereinrichtung 13 kann hierbei scheibenförmig ausgebildet sein und an ihren Randbereichen Aufnahmen für die vereinzelten Dosendeckel 3 aufweisen. In diesen Aufnahmen können die Dosendeckel 3 dann zu einer Position transportiert werden, in welcher sie auf die Behälter 15, die in Fig. 2 von unten an die Fördereinrichtung 13 herangeführt werden, aufgelegt werden. In weiterer Folge werden die Dosendeckel 3 und die Behälter 5 in einem Schritt iii) miteinander in einer Vorrichtung 14 zum Verschließen der Behälter 15 zu der Dose 12 verbunden. Bei der Vorrichtung 14 kann es sich beispielsweise um eine Falzvorrichtung handeln. Die Behälter 15 (offene Dosen) sind bevorzugterweise aus einem Metallblech, beispielsweise aus einem beschichteten oder nicht beschichteten Aluminiumblech, gefertigt.

In Schritt i) wird bei dem Vereinzeln der Dosendeckel 3 mittels des Abtrennmessers 4 durch Abrieb entstandene Partikel zumindest von einer Oberfläche des untersten Dosendeckels 3 des Stapels 2 von Dosendeckeln 3 mittels der in Fig. 1 dargestellten Absaugvorrichtung 5, 6 oder 7 abgesaugt, um eine Kontamination eines Doseninhaltes mit diesen Partikeln zu vermeiden.

Wie aus Fig. 2 ersichtlich ist, erfolgt die Absaugung der Unterseiten der Dosendeckel 3 erfolgen, bevor diese die Fördereinrichtung 14 erreichen. Die ist beispielhaft anhand der Absaugvorrichtung 5 mit der Absaugöffnung 10 dargestellt. Somit kann während Schritt i) eine Absaugung von durch Abrieb an den Dosendeckeln 3 während der Vereinzelung entstehender Partikel erfolgen.

Die abgesaugten Partikel können in dem Sammelbehälter 11 gesammelt und in einem weiteren Schritt analysiert werden.

Der Ordnung halber sei abschließend darauf hingewiesen, dass zum besseren Verständnis des Aufbaus der erfindungsgemäßen Vorrichtung diese bzw. deren Bestandteile teilweise unmaßstäblich und/oder vergrößert und/oder verkleinert dargestellt wurden.

### Bezugszeichenaufstellung

- 1: Vorrichtung
- 2: Stapel
- 3: Dosendeckel
- 4: Abtrennmesser
- 5: Absaugvorrichtung
- 6: Absaugvorrichtung
- 7: Absaugvorrichtung
- 8: Absaugöffnung
- 9: Absaugöffnung
- 10: Absaugöffnung
- 11: Sammelbehälter
- 12: Dose
- 13: Fördereinrichtung
- 14: Vorrichtung
- 15: Behälter
- 16: Absaugvorrichtung
- 17: Absaugöffnung
- 18: Filter
- a: Achse
- b: Achse

## Patentansprüche

1. Vorrichtung (1) zum Vereinzeln von in einem Stapel (2) angeordneten Dosendeckeln (3) mittels eines Abtrennmessers (4), wobei die Vorrichtung (1) zumindest eine Absaugvorrichtung (5, 6, 7) zum Absaugen von während des Vereinzelns der Dosendeckel (3) frei werdenden Partikeln von den Dosendeckeln (2) aufweist,
**dadurch gekennzeichnet, dass** eine Absaugöffnung (8) der Absaugvorrichtung (5) als Öffnung einer Düse ausgebildet ist, die in einer vertikalen Richtung betrachtet über dem Abtrennmesser (4) angeordnet ist, wobei das Abtrennmesser (4) als um eine Achse (a) drehbar gelagerte Scheibe ausgebildet ist, in einer zur Achse (a) parallelen Richtung betrachtet zumindest ein Abschnitt der Absaugöffnung (8) zumindest einen Randbereich der Scheibe abdeckt.

2. Vorrichtung nach Anspruch 1, **dadurch gekennzeichnet, dass** die zumindest eine Absaugvorrichtung (5) einen Sammelbehälter (11) für abgesaugte Partikel aufweist.

3. Verfahren zum Verschließen eines offenen Behälters (15) mit einem Dosendeckel (3) zu einer geschlossenen Dose (12), wobei in einem Schritt i) mittels eines Abtrennmessers (4) ein unterster Dosendeckel (3) eines Stapels (2) von Dosendeckeln (3) von dem Stapel (2) getrennt und vereinzelt wird und in einem Schritt ii) der vereinzelte Dosendeckel (3) mittels zumindest einer Fördereinrichtung (13) zu einer Vorrichtung (14) zum Verschließen des offenen Behälters (15) mit dem Dosendeckel (3) transportiert wird, wobei in einem Schritt iii) der Behälter (15) mit dem Dosendeckel (3) zu der Dose (12) verbunden wird, **dadurch gekennzeichnet, dass** das Verfahren unter Verwendung einer Vorrichtung gemäß Anspruch 1 erfolgt, wobei Schritt i) bei dem Vereinzeln mittels des Abtrennmessers (4) frei werdende Partikel zumindest von einer Oberfläche des untersten Dosendeckels (3) des Stapels (2) von Dosendeckeln (3) abgesaugt werden.

4. Verfahren nach Anspruch 3, **dadurch gekennzeichnet, dass** in Schritt i) bei Vereinzeln der Dosendeckel (3) mittels des Abtrennmessers (4) entstehende Partikel aus einem Zwischenraum zwischen dem untersten Dosendeckel (3) des Stapels (2) und dem nächstfolgendem Dosendeckel (3) des Stapels (2) abgesaugt werden.

5. Verfahren nach Anspruch 3 oder 4, **dadurch gekennzeichnet, dass** während Schritt i) Partikel zumindest von der Unterseite des untersten Dosendeckels (3) des Stapels (2) abgesaugt werden.

6. Verfahren nach einem der Ansprüche 3 bis 5, **dadurch gekennzeichnet, dass** nach Schritt i) Partikel zumindest von der Unterseite des in Schritt i) vereinzelten Dosendeckels (3) abgesaugt werden

7. Verfahren nach einem der Ansprüche 3 bis 6, **dadurch gekennzeichnet, dass** die in oder nach Schritt i) abgesaugten Partikel in einem Sammelbehälter (11) gesammelt werden.

8. Verfahren nach Anspruch 7, **dadurch gekennzeichnet, dass** in dem Sammelbehälter (11) gesammelte Partikel analysiert werden.

## Claims

1. A device (1) for separating can lids (3) disposed in a stack (2) by means of a separator blade (4), wherein the device (1) comprises at least one suction device (5, 6, 7) for aspirating from the can lids (3) particles re-leased during the process of separating the can lid (3),
**characterized in that** a suction opening (8) of the suction device (5) is configured as an opening of a can which, as viewed in a vertical direction, is disposed above the separator blade (4),
wherein the separator blade (4) is configured as a disk mounted so as to be rotatable about an axis (a), in a direction viewed parallel to the axis (a) at least one portion of the suction opening (8) covers at least one edge region of the disk.

2. The device according to claim 1, **characterized in that** the at least one suction device (5) has a collecting container (11) for aspirated particles.

3. A method closing an open container (15) with a can lid (3) to obtain a closed can (12), whereby in a step i), a lowermost can lid (3) in a stack (2) of can lids (3) is picked up and separated from the stack (2) by means of a separator blade (4), and in a step ii), the separated can lid (3) is conveyed by means of at least one conveyor device (13) to a device (14) for closing the open container (15) with the can lid (3), wherein in a step iii), the container (15) is connected to the can lid (3) to obtain the can (12), **characterized in that** the method is carried out using a device according to claim 1, wherein in step i) particles occurring on the can lids (3) during the separation process by of means of the separator blade (4) are aspirated from at least one surface of the lowermost can lid (3) in the stack (2) of can lids (3).

4. The method according to claim 3, **characterized in that** in step i) particles occurring during the separation process of the can lids (3) by means of the separator blade (4) are aspirated from a gap between the lowermost can lid (3) in the stack (2) and the next can lid (3) in the stack (2).

5. The method according to claim 3 or 4, **characterized in that** during step i) particles are aspirated at least from the underside of the lowermost can lid (3) in the stack (2).

6. The method according to one of claims 3 to 5, **characterized in that** after step i), particles are aspirated from at least the bottom face of the can lid (3) separated in step i).

7. The method according to one of claims 3 to 6, **characterized in that** the particles aspirated in or after step i) are collected in a collecting container (11).

8. The method according to claim 7, **characterized in that** particles collected in the collecting container (11) are analyzed.

## Revendications

1. Dispositif (1) pour la séparation de couvercles de boîtes (3) disposés dans une pile (2), au moyen d'un couteau de découpe (4), le dispositif (1) comprenant au moins un dispositif d'aspiration (5, 6, 7) pour l'aspiration des particules des couvercles de boîtes (3) libérées pendant la séparation des couvercles de boîtes (3),
**caractérisé en ce qu'**une ouverture d'aspiration (8) du dispositif d'aspiration (5) est conçue comme l'ouverture d'une buse, qui est disposée, vue dans une direction verticale, au-dessus du couteau de découpe (4),
le couteau de découpe (4) étant conçu comme un disque logé de manière rotative autour d'un axe (a), au moins une portion de l'ouverture d'aspiration (8) recouvrant au moins une zone de bord du disque, vue dans une direction parallèle à l'axe (a).

2. Dispositif selon la revendication 1, **caractérisé en ce que** l'au moins un dispositif d'aspiration (5) comprend un réservoir de collecte (11) pour les particules aspirées.

3. Procédé de scellage d'un récipient ouvert (15) avec un couvercle de boîte (3) afin d'obtenir une boîte fermée (12), moyennant quoi, dans une étape i), au moyen d'un couteau de découpe (4), un couvercle de boîte (3) le plus bas d'une pile (2) de couvercles de boîtes (3) est séparé de la pile (2) et, dans une étape ii), le couvercle de boîte (3) séparé est transporté, au moyen d'au moins un dispositif de convoyage (13) vers un dispositif (14) pour le scellage du récipient ouvert (15) avec le couvercle de boîte (3), moyennant quoi, dans une étape iii), le récipient (15) est relié avec le couvercle de boîte (3) afin d'obtenir la boîte (12), **caractérisé en ce que** le procédé est exécuté à l'aide d'un dispositif selon la revendication 1, moyennant quoi, dans l'étape i), les particules libérées, au moins d'une surface du couvercle de boîte (3) le plus bas de la pile (2) de couvercles de boîtes (3), lors de la séparation au moyen du couteau de découpe (4), sont aspirées.

4. Procédé selon la revendication 3, **caractérisé en ce que**, dans l'étape i), les particules provenant de la séparation des couvercles de boîtes (3) au moyen du couteau de découpe (4) sont aspirées hors d'un espace intermédiaire entre le couvercle de boîte (3) le plus bas de la pile (2) et le couvercle de boîte (3) suivant de la pile (2).

5. Procédé selon la revendication 3 ou 4, **caractérisé en ce que**, pendant l'étape i), les particules sont aspirées au moins à partir du côté inférieur du couvercle de boîte (3) le plus bas de la pile (2).

6. Procédé selon l'une des revendications 3 à 5, **caractérisé en ce que**, après l'étape i), les particules sont aspirées au moins à partir du côté inférieur du couvercle de boîte (3) séparé dans l'étape i).

7. Procédé selon l'une des revendications 3 à 6, **caractérisé en ce que** les particules aspirées pendant ou après l'étape i) sont collectées dans un réservoir de collecte (11).

8. Procédé selon la revendication 7, **caractérisé en ce que** les particules collectées dans le réservoir de collecte (11) sont analysées.
